# EUROPÄISCHE PATENTANMELDUNG

(11) **EP 1 279 862 A2**
(43) Veröffentlichungstag der Anmeldung: **29.01.2003**
(21) Anmeldenummer: 02014388.9
(22) Anmeldetag: 28.06.2002
(51) Int. Cl.: F16H 3/08

(54) **Schaltgetriebe**

(30) Priorität: 18.07.2001 DE 10134994
(71) Anmelder: Bayerische Motoren Werke Aktiengesellschaft, 80809 München (DE)
(72) Erfinder: Körber, Martin, 85375 Neufahrn (DE)

(57) **Zusammenfassung**

Das Schaltgetriebe weist mindestens drei koaxial hintereinander angeordnete drehbare "Getriebedrehkörper" auf, die über ein einziges "Verbindungselement" schaltbar sind, wobei den drei Getriebedrehkörpern jeweils eine separate Welle bzw. Hohlwelle zugeordnet sein kann. Das Verbindungselement hat eine Neutralstellung, in der die Getriebedrehkörper unabhängig voneinander drehbar sind und mehrere Eingriffstellungen, in denen jeweils zwei der mindestens drei Getriebedrehkörper in Drehrichtung miteinander gekoppelt sind.

## Beschreibung

Die vorliegende Erfindung betrifft ein Schaltgetriebe gemäss dem Oberbegriff des Patentanspruches 1.

Aus der DE 39 39 274 C2 ist Zweiganggetriebe bekannt, bei dem ein erstes und ein zweites schaltbares Zahnrad drehbar auf einer Eingangswelle gelagert sind. Zwischen den beiden Zahnrädern ist eine Führungsmuffe angeordnet, die drehfest mit der Welle verbunden ist. Auf der Führungsmuffe ist axial verschieblich eine Schaltmuffe angeordnet, die drei Schaltstellungen einnehmen kann, nämlich eine Mittel- bzw. Neutralstellung sowie eine erste bzw. zweite Schaltstellung, in der das erste bzw. zweite Zahnrad über die Schaltmuffe und die Führungsmuffe drehfest mit der Welle verbunden ist.

Aus der DE 20 25 296 ist eine Getriebeanordnung für Kraftfahrzeuge bekannt, die aus einem hydrodynamischen Drehmomentwandler, einer Trennkupplung, einer zur Trennkupplung parallelen Lamellenkupplung und einem Schaltgetriebe mit vier Vorwärtsgängen, einem Rückwärtsgang und einem Freilauf besteht.

Aus der DE 198 00 158 A1 ist eine Kupplung zum kraftschlüssigen Verbinden zweier rotierender Elemente bekannt, die jeweils eine Keilverzahnung aufweisen. Die beiden Keilverzahnungen sind ineinander verschiebbar und werden durch eine Synchronisationseinrichtung synchronisiert.

In Wechselgetrieben ohne Planetenradsätzen werden, wie es beispielsweise in der eingangs genannten DE 39 39 274 C1 erläutert ist, ein Gang geschaltet, in dem eine formschlüssige Verbindung zwischen einem Zahnrad und der zugehörigen Welle hergestellt wird. Ist die Verbindung zwischen dem Zahnrad und der Welle geschlossen, so kann über diesen "Pfad" ein Drehmoment übertragen werden. Nach dem Stand der Technik können über ein einziges "Verbindungselement", das heißt über eine einzige Schaltmuffe entweder ein oder zwei Gänge geschaltet werden. Ein solches "Verbindungselement" weist ein Innenteil auf, mit einer Außenzahnung mit in Achsrichtung angeordneten Zähnen, sowie ein axial verschiebliches Außenteil mit einer Innenverzahnung mit ebenfalls in Achsrichtung ausgerichteten Zähnen. Das Innenteil und das Außenteil sind stets in Eingriff. Durch axiales Verschieben des Außenteils kann ein Zahnrad zugeschaltet, d.h. in Drehrichtung formschlüssig mit der Welle verbunden werden.

Aufgabe der vorliegenden Erfindung ist es, eine Schaltungsanordnung mit erweiterter Funktionalität schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Schaltgetriebe mit mindestens drei koaxial hintereinander angeordneten drehbaren "Getriebedrehkörpern", die über ein einziges "Verbindungselement" schaltbar sind, wobei den drei Getriebedrehkörpern jeweils eine separate Welle bzw.

Hohlwelle zugeordnet sein kann. Das Verbindungselement hat eine Neutralstellung, in der die Getriebedrehkörper unabhängig voneinander drehbar sind und mehrere Eingriffstellungen, in denen jeweils zwei der mindestens drei Getriebedrehkörper in Drehrichtung miteinander gekoppelt sind.

Das Schaltgetriebe gemäß der Erfindung weist im Unterschied zum Stand der Technik eine höhere "Variabilität" auf. Das heißt, mit einem einzigen Verbindungselement bzw. mit einer einzigen Schaltmuffe können mindestens vier Schaltstellungen realisiert werden, nämlich eine Neutralstellung sowie mindestens drei verschiedene Eingriffsstellungen bzw. Gänge, in denen jeweils zwei "Getriebedrehkörper" - Zahnrad, Welle bzw. Hohlwelle - drehfest miteinander gekoppelt sind. Somit ergibt sich eine sehr kompakte Bauweise. Die Schaltungsanordnung gemäß der Erfindung kann beispielsweise am Eingang eines Wechselgetriebes angeordnet sein, wodurch eine erhebliche Vergrößerung der Anzahl möglicher Übersetzungsstufen erreicht wird.

Das Verbindungselement weist eine Innenverzahnung und die Getriebedrehkörper weisen jeweils eine zugeordnete mit der Innenverzahnung in Eingriff bringbare Außenverzahnung auf. Vorzugsweise sind die Stirnseiten der Verzahnungen abgeschrägt, was die beim Schalten aufzubringenden Kräfte verringert und das Ineinandergreifen der Verzahnungen erleichtert und somit den Schaltkomfort verbessert.

Nach einer Weiterbildung der Erfindung ist zwischen einem ersten und zweiten Getriebedrehkörper ein dritter Getriebedrehkörper angeordnet, wobei zwei der Getriebedrehkörper mit je einer zugeordneten Welle und der andere Getriebedrehkörper mit einer dazu koaxialen Hohlwelle verbunden ist, wodurch eine sehr kompakte Bauweise erreicht wird.

Im folgenden wird die Erfindung anhand von Ausführungsbeispielen im Zusammenhang mit der Zeichnung näher erläutert. Es zeigen:
- Figuren 1a - 1c: eine Schaltungsanordnung nach dem Stand der Technik;
- Figuren 2a - 2d: vier Schaltstellungen eines Schaltgetriebes gemäß der Erfindung;
- Figuren 3a - 3d: die Stellungen der Verzahnungen gemäß den Schaltstellungen der Figuren 2a - 2d;
- Figur 4: ein 6+R-Getriebe, bei dem die erfindungsgemäße Schaltungsanordnung am Getriebeeingang angeordnet ist;
- Figuren 5a - 5f und Figuren 6a - 6e: verschiedene Schaltstellungen des in Figur 4 gezeigten Getriebes.

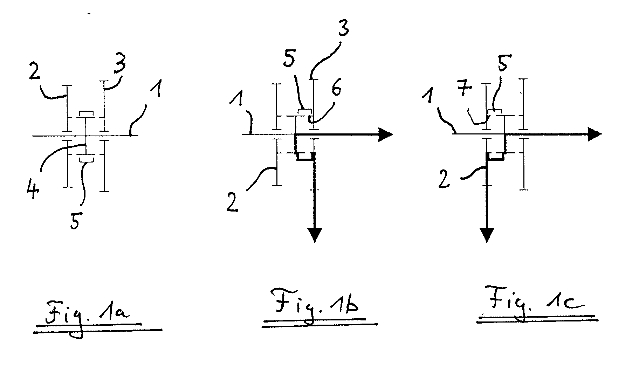

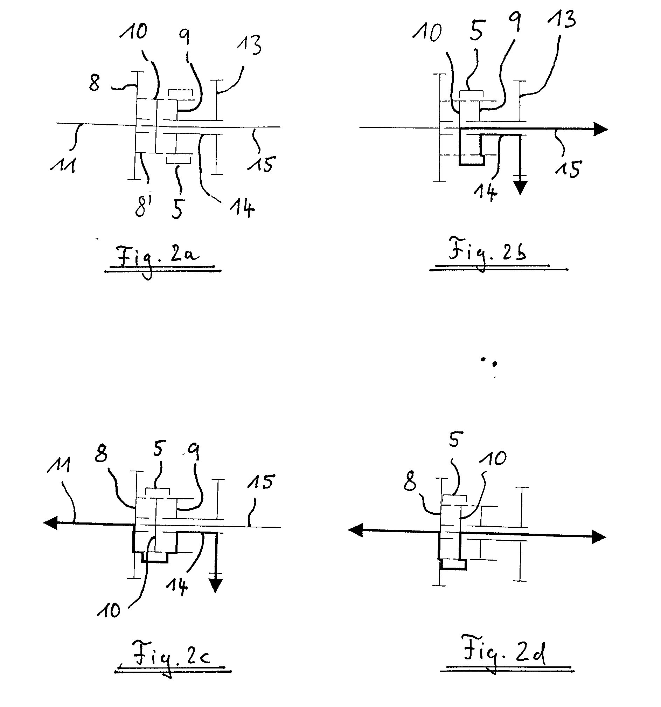

**Figur 1a** zeigt ein Schaltgetriebe nach dem Stand der Technik in "Neutral- bzw. Leerlaufstellung". Auf einer Getriebewelle 1 sind drehbar ein erstes schaltbares Zahnrad 2 und ein zweites schaltbares Zahnrad 3 gelagert. Zwischen den beiden Zahnrädern 2, 3 ist ein "Schaltzahnrad" 4 angeordnet, das drehfest mit der Getriebewelle 1 verbunden ist. Eine Schaltmuffe 5 ist in bekannter Weise axial verschieblich auf dem Schaltzahnrad 4 angeordnet. Durch axiales Verschieben der Schaltmuffe 5 kann eine drehfeste Verbindung des Schaltzahnrades 4 bzw. der Getriebewelle 1 mit einem der beiden Zahnräder 2 bzw. 3 hergestellt werden, was in den Figuren 1b und 1c dargestellt ist.

In **Figur 1b** greift eine Innenverzahnung der Schiebmuffe 5 in eine Außen- bzw. Schaltverzahnung 6 des Zahnrades 3 ein. In dieser Schaltstellung der Schiebmuffe 5 ist das Zahnrad 3 drehfest mit der Getriebewelle 1 verbunden, wohingegen das Zahnrad 2 frei auf der Welle 1 drehbar ist.

In **Figur 1c** befindet sich die Schaltmuffe 5 in ihrer "linken" Schaltstellung, in der sie in die Schaltverzahnung 7 des Zahnrades 2 eingreift. Hier ist das Zahnrad 2 mit der Getriebewelle 1 drehfest verbunden.

Die **Figuren 2a - 2d** zeigen verschiedene Schaltstellungen einer Schaltungsanordnung gemäß der Erfindung.

Die Schaltungsanordnung weist drei "Getriebedrehkörper" auf, nämlich einen ersten Getriebedrehkörper 8, einen zweiten Getriebedrehkörper 9 und einen zwischen dem ersten und zweiten Getriebedrehkörper 8 bzw. 9 angeordneten dritten Getriebedrehkörper 10. Der erste Getriebedrehkörper 8 ist ein Zahnrad, das drehfest mit einer ersten Welle 11 verbunden ist. Das Zahnrad 8 weist an seiner dem dritten Getriebedrehkörper 10 zugewandten Seite eine Schaltverzahnung 8' auf. Der zweite Getriebedrehkörper 9 ist ein Zahnrad, das mit einem Zahnrad 13 über eine Hohlwelle 14 drehfest gekoppelt ist. Der dritte Getriebedrehkörper 10 ist hier ein mit einer weiteren Welle 15 verbundenes Zahnrad, wobei die Welle 15 des dritten Getriebedrehkörpers 10 durch die Hohlwelle 14 des zweiten Getriebedrehkörpers 9 hindurchgeführt ist.

Eine axial verschiebliche Schaltmuffe 5 ermöglicht eine "rotatorische Kopplung" von jeweils zwei der Getriebedrehkörper 8 - 10. In der in Figur 2a gezeigten Leerlaufstellung ist die Schaltmuffe 5 vollständig auf den zweiten Getriebedrehkörper 9 geschoben, das heißt, sie greift in keinen der anderen beiden Getriebedrehkörper 8 bzw. 10 ein. Die Getriebedrehkörper 8 - 10 sind somit unabhängig voneinander drehbar.

**Figur 2b** zeigt eine "erste Eingriffsstellung", in der die Schaltmuffe 5 gegenüber der Leerlaufstellung nach "links" verschoben ist. In dieser Stellung sind der dritte Getriebedrehkörper 10 bzw. die Welle 15 über die Schaltmuffe 5 drehfest mit dem zweiten Getriebedrehkörper 9 bzw. der Hohlwelle 14 und dem Zahnrad 13 verbunden.

**Figur 2c** zeigt eine zweite Eingriffsstellung der Schaltmuffe 5. Hier sind der erste Getriebedrehkörper 8 und der zweite Getriebedrehkörper 9 drehfest über die Schaltmuffe 5 miteinander verbunden. In dieser Schaltstellung ist eine Drehmomentenübertragung von der ersten Welle 11 auf die Hohlwelle 14 möglich. Der dritte Getriebedrehkörper 10 ist in dieser Schaltstellung durch die Schaltmuffe 5 "überbrückt".

**Figur 2d** zeigt eine dritte Eingriffsstellung, bei der der erste Getriebedrehkörper 8 und der dritte Getriebedrehkörper 10 drehfest über die Schaltmuffe 5 miteinander verbunden sind.

Mit ein und derselben Schaltmuffe 5 sind also eine Leerlaufstellung und drei Eingriffsstellungen schaltbar.

Die **Figuren 3a - 3d** zeigen entsprechend den Schaltzuständen der Figuren 2a - 2d die Stellungen der Schaltverzahnungen in "abgewickelter Darstellung".

In der in Figur 3a gezeigten Neutralstellung ist die Schaltmuffe 5 vollständig auf den zweiten Getriebedrehkörper 9 aufgeschoben, das heißt beide Teilschaltverzahnungen 5', 5" der Schaltmuffe 5 greifen in eine zugeordnete Schaltverzahnung 9' des zweiten Getriebedrehkörpers 9 ein. Die Schaltmuffe 5 ist hier also nicht mit der Schaltverzahnung 8' des ersten Getriebedrehkörpers 8 und auch nicht mit der Schaltverzahnung 10' des dritten Getriebedrehkörpers 10 verbunden.

Die Teilschaltverzahnungen 5', 5" sind Innenverzahnungen und die Schaltverzahnung 9' ist eine Außenverzahnung. Es ist ersichtlich, dass die Schaltverzahnungen 8', 9' und 10' jeweils abgeschrägte Stirnseiten 16' aufweisen, was den Schaltkomfort, das heißt das ineinander Einführen der Schaltverzahnungen erleichtert.

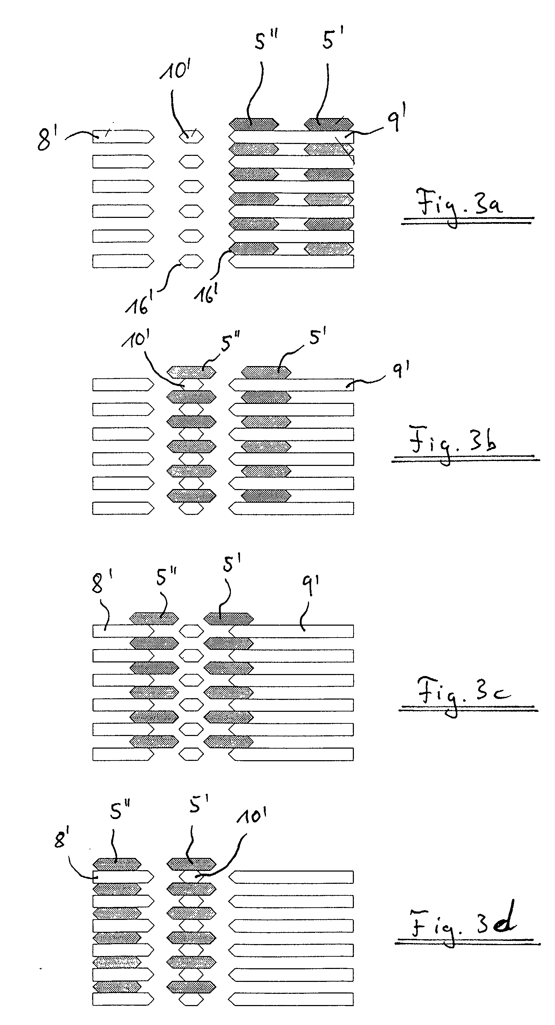

In **Figur 3b** greift die erste Teilschaltverzahnung 5' der Schaltmuffe 5 in die Schaltverzahnung 9' ein und die zweite Teilschaltverzahnung 5" greift in die Schaltverzahnung 10' ein.

In **Figur 3c** greift die erste Teilschaltverzahnung 5' in die Schaltverzahnung 9' ein und die zweite Teilschaltverzahnung 5" greift in die Schaltverzahnung 8' ein. Hier ist also der dritte Getriebedrehkörper 10 "überbrückt".

In **Figur 3d** greift die erste Teilschaltverzahnung 5' in die Schaltverzahnung 10' und die zweite Teilschaltverzahnung 5" in die Schaltverzahnung 8' ein.

Alternativ zu den in Figuren 2a - 2d und 3a - 3d gezeigten Ausführungsbeispielen kann auch ein "Verbindungselement" bzw. eine Schaltmuffe vorgesehen sein, die mehr als vier Schaltstellungen hat. Beispielsweise können mehrere Neutralstellungen vorgesehen sein bzw. es können mehr als drei Getriebedrehkörper vorgesehen sein, die über eine einzige Schaltmuffe schaltbar sind.

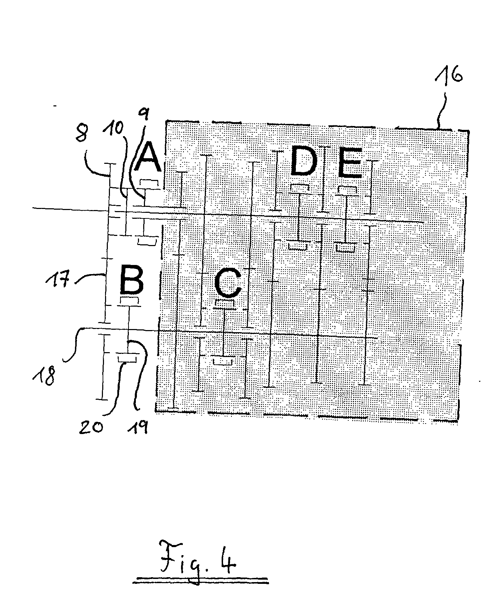

**Figur 4** zeigt ein Sechsganggetriebe mit einem Rückwärtsgang (6+R-Getriebe), das hier schematisch mit 16 bezeichnet ist. Die in den Figuren 2a - 2d und 3a - 3d beschriebene Schaltungsanordnung ist hier am Eingang des Getriebes 16 angeordnet und mit dem Buchstaben A bezeichnet. Der erste Getriebedrehkörper 8 kämmt mit einem Zahnrad 17, das drehbar auf einer Welle 18 des Getriebes 16 angeordnet ist. Mit der Welle 18 ist drehfest ein Zahnrad 19 verbunden. Durch Verschieben einer Schaltmuffe 20 kann eine drehfeste Verbindung des Zahnrades 17 mit dem Zahnrad 19 erreicht werden.

Die Buchstaben A, B, C, D und E bezeichnen hier allgemein "Verbindungselemente" bzw. Schaltmuffen des Gesamtgetriebes, die unterschiedliche Schaltstellungen einnehmen können, was im folgenden noch näher erläutert wird.

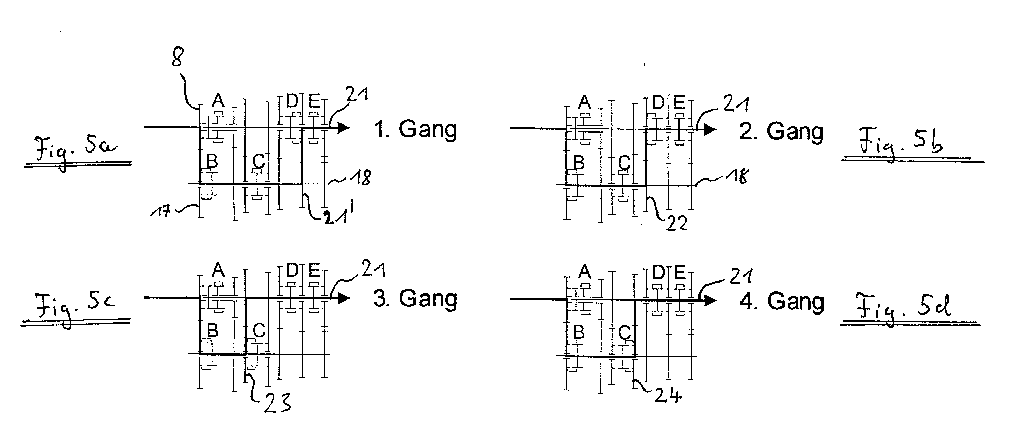

Die **Figuren 5a - 5d** zeigen verschiedene Schaltzustände, nämlich die "Gangstellungen 1 bis 4". Die Schaltmuffe 5 des "Verbindungselementes A" befindet sich hier jeweils in der Neutralstellung (vgl. Fig. 2a).

In **Figur 5a** erfolgt eine Drehmomentenübertragung vom Getriebedrehkörper 8 über das Zahnrad 17 auf die Welle 18 und über eine Zahnradstufe 21' auf eine Ausgangswelle 22 des Getriebes 16 (vgl. Fig. 4).

In **Figur 5b** ist das Verbindungselement D "nach links" umgeschaltet, das heißt hier erfolgt die Drehmomentenübertragung von der Welle 18 auf die Ausgangswelle 21 über eine Zahnradstufe 22.

In **Figur 5c** ist das Verbindungselement C "nach links" umgeschaltet, das heißt die Drehmomentenübertragung auf die Ausgangswelle 21 erfolgt über eine Zahnradstufe 23.

In **Figur 5d** ist das Verbindungselement C "nach rechts" umgeschaltet. In dieser Schaltstellung erfolgt die Drehmomentenübertragung auf die Ausgangswelle 21 über eine Zahnradstufe 24.

In **Figur 5e** befindet sich das Verbindungselement A in seiner "linken" Schaltstellung, in der eine direkte Drehmomentenübertragung von der Welle 11 auf die mit dem dritten Getriebedrehkörper 10 verbundene Ausgangswelle 21 erfolgt (vgl. Fig. 2d).

In **Figur 5f** sind der zweite und der dritte Getriebedrehkörper 9, 10 über die Schaltmuffe 5 miteinander gekoppelt (vgl. Fig. 2b). Von der Welle 18 erfolgt über eine Zahnradstufe 24 eine Drehmomentenübertragung auf die Ausgangswelle 21.

**Figur 5g** zeigt die Schaltstellung eines Rückwärtsganges, bei dem die Drehmomentenübertragung von der Eingangswelle 11 über eine Zahnradstufe 25 auf die Ausgangswelle 21 erfolgt. Hier befindet sich die Schaltmuffe 5 entsprechend Fig. 2a in ihrer Neutralstellung.

Bei sämtlichen in den Figuren 5a - 5g dargestellten Schaltzuständen befindet sich das Verbindungselement B in seiner linken Eingriffsstellung, in der das Zahnrad 17 drehfest mit der Welle 18 verbunden ist.

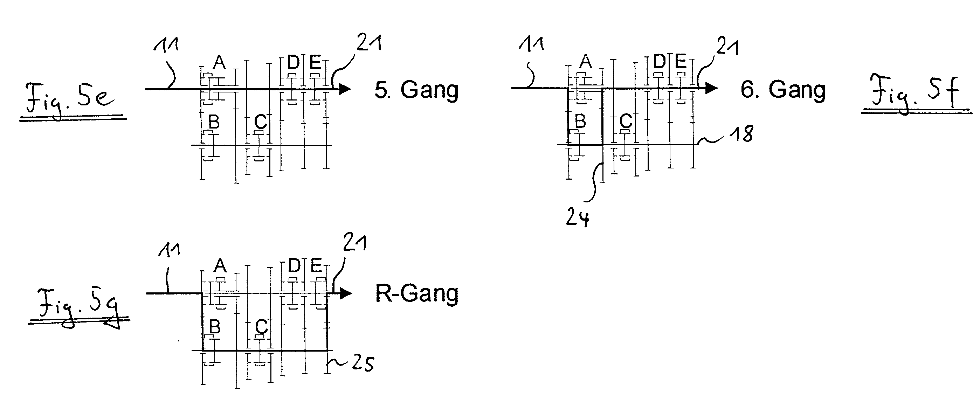

In den **Fig. 6a-6f** erfolgt die Drehmomentenübertragung von der Eingangswelle 11 über das zweite Getriebedrehelement 13, das heißt über eine Zahnradstufe 26 und eine weitere Zahnradstufe des Getriebes 16 auf die Ausgangswelle 21. Im Unterschied zu den **Fig. 5a-5g** befindet sich das Verbindungselement B in den Figuren 6a - 6e in seiner Neutralstellung, das heißt das Zahnrad 17 ist hier frei auf der Welle 18 drehbar.

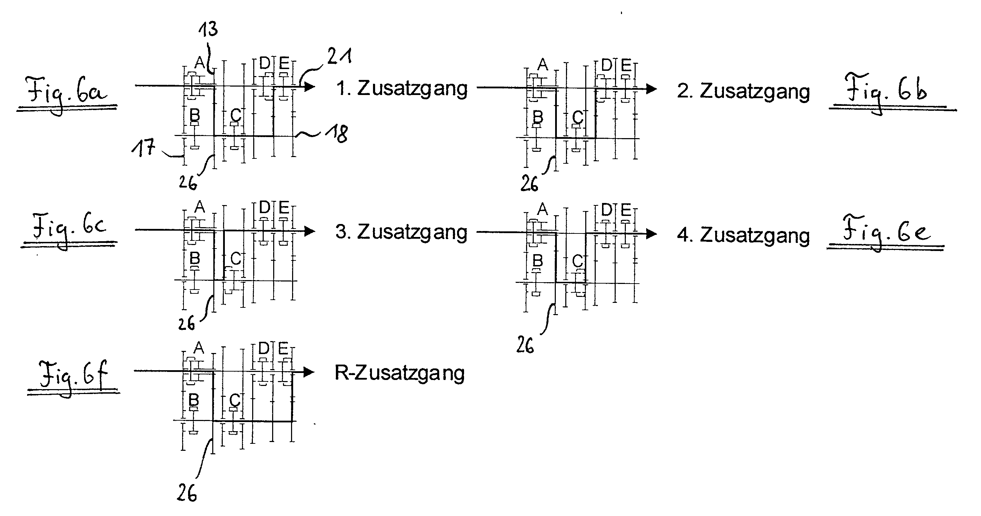

Durch Variieren der Schaltstellungen der Verbindungselement C, D und E werden die in den Figuren 6b, 6f dargestellten Kraftflussrichtungen erreicht.

Durch die Anordnung eines "Vier-Stellungs-Elementes A" an der in den Figuren 4 - 6 gezeigten Stelle im Getriebe in Verbindung mit dem Verbindungselement B können bei einem Getriebe mit sechs Vorwärtsgangstufen und einer Rückwärtsgangstufe fünf zusätzliche in den Figuren 6a - 6f gezeigte Gangstufen erreicht werden und zwar ohne dass eine Vergrößerung der Anzahl der Laufverzahnungen erforderlich ist.

## Patentansprüche

1. Schaltgetriebe mit
mindestens drei koaxial angeordneten Getriebedrehkörpern,
einem axial verschieblichen Verbindungselement, das eine Neutralstellung hat, in der die Getriebedrehkörper unabhängig voneinander drehbar sind und das in eine Drehkopplungsstellung verschiebbar ist, in der zwei der koaxial angeordneten Getriebedrehkörper über das Verbindungselement in Drehrichtung miteinander gekoppelt sind, **da**
**durch gekennzeichnet, dass**
das Verbindungselement (5) mindestens drei Eingriffsstellungen hat, in denen jeweils zwei der Getriebedrehkörper (8 - 10) drehgekoppelt sind.

2. Schaltgetriebe nach Anspruch 1, **dadurch gekennzeichnet, dass** zwischen einem ersten Getriebedrehkörper (8) und einem zweiten Getriebedrehkörper (9) ein dritter Getriebedrehkörper (10) angeordnet ist, wobei zwei der Getriebedrehkörper (8 - 10) jeweils mit einer separaten Welle (11, 15) und der andere Getriebedrehkörper (9) mit einer dazu koaxialen Hohlwelle (14) verbunden sind.

3. Schaltgetriebe nach Anspruch 2, **dadurch gekennzeichnet, dass** dem ersten Getriebedrehkörper (8) und dem dritten Getriebedrehkörper (10) jeweils eine Welle (11, 15) und dem zweiten Getriebedrehkörper (9) eine Hohlwelle (14) zugeordnet ist.

4. Schaltgetriebe nach Anspruch 3, **dadurch gekennzeichnet, dass** die Welle (15) des dritten Getriebedrehkörpers (10) durch die Hohlwelle (14) des zweiten Getriebedrehkörpers (9) hindurchgeführt ist.

5. Schaltgetriebe nach einem der Ansprüche 2 bis 4, **dadurch gekennzeichnet, dass** der erste und der zweite Getriebedrehkörper (8, 9) über ihre zugeordnete Welle (11) bzw. Hohlwelle (14) jeweils mit einem Zahnrad (8, 13) verbunden sind.

6. Schaltgetriebe nach einem der Ansprüche 2 bis 5, **dadurch gekennzeichnet, dass** die Welle (11) des ersten Getriebedrehkröpers (8) eine Getriebeeingangswelle und die Welle (15) des dritten Getriebedrehkörpers (10) und die Hohlwelle (14) des zweiten Getriebedrehkörpers (9) Ausgangswellen sind.

7. Schaltgetriebe nach einem der Ansprüche 1 bis 6, **dadurch gekennzeichnet, dass** das Schaltgetriebe am Eingang eines Wechselgetriebes (16) angeordnet ist und eine vorgelagerte Zusatzschaltstufe bildet.

8. Schaltgetriebe nach Anspruch 7, **dadurch gekennzeichnet, dass** dass der dritte Getriebedrehkörper (10) drehfest mit einer Ausgangswelle (21) des Wechselgetriebes (16) verbunden ist und dass der erste und der zweite Getriebedrehkörper (8, 9, 13) über separate Zahnradstufen (17, 26) mit einer Eingangswelle (18) des Wechselgetriebes (16) koppelbar sind.

9. Schaltgetriebe nach einem der Ansprüche 1 bis 8, **dadurch gekennzeichnet, dass** das Verbindungselement (5) eine Innenverzahnung aufweist und dass die Getriebedrehkörper (8 - 10) jeweils eine Außenverzahnung aufweisen, die in Eingriff mit der Innenverzahnung bringbar ist.

10. Schaltgetriebe nach Anspruch 9, **dadurch gekennzeichnet, dass** Stirnseiten der Innenverzahnung und/oder der Außenverzahnung Abschrägungen (16) zum Ineinanderführen der Verzahnungen (8', 9', 10') aufweisen.

11. Schaltgetriebe nach einem der Ansprüche 1 bis 10, **dadurch gekennzeichnet, dass** das Verbindungselement (5) eine Schaltmuffe ist.

12. Schaltgetriebe nach Anspruch 11, **dadurch gekennzeichnet, dass** die Schaltmuffe (5) zwei Teilverzahnungen (5', 5") aufweist, die einen axialen Abstand voneinander haben, wobei der Abstand so groß ist, dass bei einer Drehkopplung des ersten und des zweiten Getriebedrehkörpers (8, 9) der zwischen dem ersten und dem zweiten Getriebedrehkörper (8, 9) angeordnete dritte Getriebedrehkörper (10) überbrückt ist.
